(19) **Europäisches Patentamt / European Patent Office / Office européen des brevets**

(11) **EP 4 546 468 A1**

(12) **EUROPEAN PATENT APPLICATION**
published in accordance with Art. 153(4) EPC

(43) Date of publication:
**30.04.2025 Bulletin 2025/18**

(21) Application number: **23831170.8**

(22) Date of filing: **16.06.2023**

(51) International Patent Classification (IPC):
*H01M 4/62* (2006.01)    *C08K 3/04* (2006.01)
*C08K 5/3415* (2006.01)    *C08K 5/5398* (2006.01)
*C08L 101/00* (2006.01)    *H01G 11/22* (2013.01)
*H01G 11/30* (2013.01)    *H01G 11/60* (2013.01)
*H01M 4/13* (2010.01)    *H01M 4/139* (2010.01)

(52) Cooperative Patent Classification (CPC):
**C08K 3/04; C08K 5/3415; C08K 5/5398;**
**C08L 101/00; H01G 11/22; H01G 11/30;**
**H01G 11/60; H01M 4/13; H01M 4/139; H01M 4/62;**
Y02E 60/10

(86) International application number:
**PCT/JP2023/022504**

(87) International publication number:
**WO 2024/004724 (04.01.2024 Gazette 2024/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.06.2022 JP 2022102980**

(71) Applicant: **Zeon Corporation**
**Tokyo 100-8246 (JP)**

(72) Inventor: **NAKAI Akito**
**Tokyo 100-8246 (JP)**

(74) Representative: **Maiwald GmbH**
**Elisenhof**
**Elisenstraße 3**
**80335 München (DE)**

(54) **BINDER COMPOSITION FOR ELECTROCHEMICAL ELEMENT, CONDUCTIVE MATERIAL DISPERSION FOR ELECTROCHEMICAL ELEMENT, SLURRY FOR ELECTROCHEMICAL ELEMENT ELECTRODE, ELECTRODE FOR ELECTROCHEMICAL ELEMENT, AND ELECTROCHEMICAL ELEMENT**

(57) A binder composition for an electrochemical device contains a polymer including a nitrile group-containing monomer unit, an alkylene structural unit, and a hydrophilic group-containing monomer unit, N-methyl-2-pyrrolidone, and triphenylphosphine sulfide. Content of the triphenylphosphine sulfide is not less than 2 mass ppm and not more than 100 mass ppm relative to content of the polymer. A relationship formula: $0.004(\%) \leq \{(a)/(b)\} \times 100(\%) \leq 0.150(\%)$ is satisfied when content of the triphenylphosphine sulfide relative to content of the polymer is taken to be (a) and content of the hydrophilic group-containing monomer unit relative to content of the polymer is taken to be (b).

EP 4 546 468 A1

**Description**

TECHNICAL FIELD

The present disclosure relates to a binder composition for an electrochemical device, a conductive material dispersion liquid for an electrochemical device, a slurry for an electrochemical device electrode, an electrode for an electrochemical device, and an electrochemical device.

BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide range of applications. Consequently, in recent years, studies have been made to improve battery members such as electrodes for the purpose of achieving even higher electrochemical device performance.

An electrode used in an electrochemical device normally includes a current collector and an electrode mixed material layer formed on the current collector. This electrode mixed material layer is formed by, for example, applying a slurry containing an electrode active material, a binder-containing binder composition, and so forth onto the current collector and then drying the applied slurry.

Attempts have been made to improve binder compositions used in the formation of electrode mixed material layers with the aim of achieving further improvement of electrochemical device performance.

For example, Patent Literature (PTL) 1 discloses a binder composition for a non-aqueous secondary battery positive electrode containing a first binder, wherein iron and at least one of ruthenium and rhodium are contained in the binder composition, and the total content of iron, ruthenium, and rhodium is $5 \times 10^{-3}$ parts by mass or less per 100 parts by mass of the first binder. According to PTL 1, the use of this binder composition enables production of a positive electrode that yields a non-aqueous secondary battery having excellent life characteristics even in a situation in which aging is performed under low temperature and low depth of charge conditions.

CITATION LIST

Patent Literature

PTL 1: WO2016/103730A1

SUMMARY

(Technical Problem)

In recent years, conductive materials have been used in the formation of electrode mixed material layers. The formation of an electrode mixed material layer in which a conductive material is used is performed using a conductive material dispersion liquid that is obtained through mixing of the conductive material with a binder composition.

However, there is room for improvement of the conventional binder composition for an electrochemical device described above from a viewpoint of increasing dispersibility of a conductive material. Moreover, it would also be desirable for the conventional binder composition for an electrochemical device described above to cause strong close adherence between a current collector and an electrode mixed material layer that is formed using the binder composition (i.e., to cause an electrode to display excellent peel strength). Furthermore, there is also room for improvement of an electrode that is produced using the conventional binder composition for an electrochemical device described above in terms of reducing evolution of gas accompanying repeated charging and discharging.

Accordingly, one object of the present disclosure is to provide a binder composition for an electrochemical device that enables production of a conductive material dispersion liquid having sufficiently high conductive material dispersibility and that also enables production of an electrode having excellent peel strength and reduced gas evolution.

Another object of the present disclosure is to provide a conductive material dispersion liquid for an electrochemical device and a slurry for an electrochemical device electrode that have sufficiently high conductive material dispersibility and that also enable production of an electrode having excellent peel strength and reduced gas evolution.

Yet another object of the present disclosure is to provide an electrode for an electrochemical device that has excellent peel strength and reduced gas evolution and an electrochemical device that includes this electrode for an electrochemical device.

(Solution to Problem)

The inventor conducted diligent investigation with the aim of solving the problems set forth above. The inventor discovered that dispersibility of a conductive material in a conductive material dispersion liquid can be sufficiently increased by using a binder composition that contains a polymer including a nitrile group-containing monomer unit, an alkylene structural unit, and a hydrophilic group-containing monomer unit, N-methyl-2-pyrrolidone (hereinafter, also abbreviated as "NMP"), and triphenylphosphine sulfide and in which the content of the triphenylphosphine sulfide is within a specific range and a specific relationship is satisfied by the content of the triphenylphosphine sulfide and the content of the hydrophilic group-containing monomer unit. Moreover, the inventor made a new discovery that by using this binder composition, it is possible to produce an electrode having excellent peel strength and reduced gas evolution. In this manner, the inventor completed the present disclosure.

Specifically, with the aim of advantageously solving the problems set forth above, [1] a presently disclosed binder composition for an electrochemical device comprises: a polymer including a nitrile group-containing monomer unit, an alkylene structural unit, and a hydrophilic group-containing monomer unit; N-methyl-2-pyrrolidone; and triphenylphosphine sulfide, wherein content of the triphenylphosphine sulfide is not less than 2 mass ppm and not more than 100 mass ppm relative to content of the polymer, and a relationship formula shown below:

$$0.004(\%) \leq \{(a)/(b)\} \times 100(\%) \leq 0.150(\%)$$

is satisfied when the content of the triphenylphosphine sulfide relative to the content of the polymer is taken to be (a) and content of the hydrophilic group-containing monomer unit relative to the content of the polymer is taken to be (b). Through a binder composition for an electrochemical device that contains a polymer having a specific chemical composition, NMP, and triphenylphosphine sulfide and in which the content of triphenylphosphine sulfide is within a specific range and a specific relationship is satisfied by the content of triphenylphosphine sulfide and the content of the hydrophilic group-containing monomer unit in this manner, it is possible to sufficiently increase dispersibility of a conductive material in a conductive material dispersion liquid. Moreover, by using this binder composition for an electrochemical device, it is possible to produce an electrode having excellent peel strength and reduced gas evolution.

The phrase "includes a monomer unit" as used in the present disclosure means that "a polymer obtained with the monomer includes a repeating unit derived from the monomer". Moreover, the proportion in which each monomer unit and/or structural unit is included in a polymer can be measured by a nuclear magnetic resonance (NMR) method such as $^1$H-NMR or $^{13}$C-NMR.

Furthermore, the "content of triphenylphosphine sulfide" referred to in the present disclosure can be measured by gas chromatography.

[2] In the presently disclosed binder composition for an electrochemical device, content of monovalent cations is preferably 100 mass ppm or less relative to the content of the polymer. When the content of monovalent cations is 100 mass ppm or less relative to the content of the polymer, cross-linking of hydrophilic group-containing monomer units in the polymer via monovalent cations can be inhibited, thereby enabling stabilization of viscosity of the binder composition for an electrochemical device.

The "content of monovalent cations" referred to in the present disclosure can be measured by a method described in the EXAMPLES section.

Moreover, with the aim of advantageously solving the problems set forth above, [3] a presently disclosed conductive material dispersion liquid for an electrochemical device comprises at least: the binder composition for an electrochemical device according to the foregoing [1] or [2]; and a conductive material. A conductive material dispersion liquid for an electrochemical device that contains at least the presently disclosed binder composition for an electrochemical device and a conductive material in this manner has sufficiently high conductive material dispersibility. Moreover, by using this conductive material dispersion liquid for an electrochemical device, it is possible to produce an electrode having excellent peel strength and reduced gas evolution.

[4] In the presently disclosed conductive material dispersion liquid for an electrochemical device, the conductive material is preferably one or more carbon nanotubes. By using carbon nanotubes as the conductive material, it is possible to reduce resistance of an electrode mixed material layer and improve device characteristics of an electrochemical device.

Furthermore, with the aim of advantageously solving the problems set forth above, [5] a presently disclosed slurry for an electrochemical device electrode comprises at least: the conductive material dispersion liquid for an electrochemical device according to the foregoing [3] or [4]; and an electrode active material. By using a slurry for an electrochemical device electrode that contains at least the conductive material dispersion liquid for an electrochemical device set forth above and an electrode active material, it is possible to produce an electrode having excellent peel strength and reduced gas evolution.

Also, with the aim of advantageously solving the problems set forth above, [6] a presently disclosed electrode for an electrochemical device comprises an electrode mixed material layer formed using the slurry for an electrochemical device electrode set forth above. An electrode that includes an electrode mixed material layer formed using the slurry for an electrochemical device electrode set forth above has excellent peel strength and reduced gas evolution.

Moreover, with the aim of advantageously solving the problems set forth above, [7] a presently disclosed electrochemical device comprises the electrode for an electrochemical device set forth above. An electrochemical device that includes the electrode for an electrochemical device set forth above has excellent device characteristics.

(Advantageous Effect)

According to the present disclosure, it is possible to provide a binder composition for an electrochemical device that enables production of a conductive material dispersion liquid having sufficiently high conductive material dispersibility and that also enables production of an electrode having excellent peel strength and reduced gas evolution.

Moreover, according to the present disclosure, it is possible to provide a conductive material dispersion liquid for an electrochemical device and a slurry for an electrochemical device electrode that have sufficiently high conductive material dispersibility and that also enable production of an electrode having excellent peel strength and reduced gas evolution.

Furthermore, according to the present disclosure, it is possible to provide an electrode for an electrochemical device that has excellent peel strength and reduced gas evolution and an electrochemical device that includes this electrode for an electrochemical device.

DETAILED DESCRIPTION

The following provides a detailed description of embodiments of the present disclosure.

The presently disclosed binder composition for an electrochemical device can be mixed with a conductive material to obtain the presently disclosed conductive material dispersion liquid for an electrochemical device containing the conductive material and the binder composition for an electrochemical device and can then be used to produce a slurry for an electrochemical device electrode, for example.

Moreover, the presently disclosed slurry for an electrochemical device electrode that is produced using the conductive material dispersion liquid for an electrochemical device can be used in production of an electrode of an electrochemical device such as a lithium ion secondary battery.

Furthermore, a feature of the presently disclosed electrochemical device is that it includes the presently disclosed electrode for an electrochemical device that is produced using the slurry for an electrochemical device electrode.

(Binder composition for electrochemical device)

The presently disclosed binder composition for an electrochemical device (hereinafter, also referred to simply as a "binder composition") contains a polymer and triphenylphosphine sulfide in N-methyl-2-pyrrolidone (NMP) serving as a solvent and has features that the polymer includes a nitrile group-containing monomer unit, an alkylene structural unit, and a hydrophilic group-containing monomer unit, that the content of triphenylphosphine sulfide is not less than 2 mass ppm and not more than 100 mass ppm relative to the content of the polymer, and that the following relationship formula is satisfied when the content of triphenylphosphine sulfide relative to the content of the polymer is taken to be (a) and the content of the hydrophilic group-containing monomer unit relative to the content of the polymer is taken to be (b).

$$0.004(\%) \leq \{(a)/(b)\} \times 100(\%) \leq 0.150(\%)$$

Note that the presently disclosed binder composition may optionally further contain components used in the field of electrochemical devices as other components besides the above-described components.

In the presently disclosed binder composition, as a result of the polymer including specific monomer and structural units, the content of triphenylphosphine sulfide being within a specific range, and a specific relationship being satisfied by the content of triphenylphosphine sulfide and the content of a hydrophilic group-containing monomer unit, dispersibility of a conductive material in a conductive material dispersion liquid can be sufficiently increased by using this binder composition. Moreover, by using the presently disclosed binder composition, it is possible to produce an electrode having excellent peel strength and reduced gas evolution.

Although it is not clear why dispersibility of a conductive material in a conductive material dispersion liquid can be sufficiently increased and an electrode having excellent peel strength and reduced gas evolution can be produced by using the presently disclosed binder composition, the reason for this is presumed to be as follows.

As a result of the presently disclosed binder composition containing triphenylphosphine sulfide in an amount of not less than 2 mass ppm and not more than 100 mass ppm relative to the content of the polymer, the occurrence of gelation due to thickening of the polymer is inhibited during production of a conductive material dispersion liquid through the contribution of triphenylphosphine sulfide, thereby resulting in increased dispersibility of a conductive material in the conductive material dispersion liquid. Moreover, since gelation of the polymer is also inhibited in a slurry for an electrochemical device electrode that contains this conductive material dispersion liquid, an electrode mixed material layer that is formed using the slurry for an electrochemical device electrode can closely adhere strongly to a current collector. In addition, gas evolution of an electrode is reduced because triphenylphosphine sulfide reduces water retention by the polymer.

<Polymer>

The polymer is a component that can hold components contained in an electrode mixed material layer formed using a slurry for an electrode and can thereby prevent shedding of components from the electrode mixed material layer.

The polymer includes a nitrile group-containing monomer unit, an alkylene structural unit, and a hydrophilic group-containing monomer unit as previously described and may optionally further include other monomer units.

[Nitrile group-containing monomer unit]

The nitrile group-containing monomer unit is a repeating unit derived from a nitrile group-containing monomer. Note that a monomer unit that can correspond to a hydrophilic group-containing monomer unit (i.e., a monomer unit including a hydrophilic group such as an acidic group or a hydroxyl group) is not encompassed by the "nitrile group-containing monomer unit" that is a requirement of the polymer according to the present disclosure even in a case in which that monomer unit includes a nitrile group.

Examples of nitrile group-containing monomers that can form the nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile.

Of these examples, acrylonitrile and methacrylonitrile are preferable as nitrile group-containing monomers from a viewpoint of increasing binding strength of the polymer, with acrylonitrile being more preferable.

Note that one nitrile group-containing monomer can be used individually, or two or more nitrile group-containing monomers can be used in combination in a freely selected ratio.

The proportional content of the nitrile group-containing monomer unit in the polymer when all repeating units (total of monomer units and structural units) in the polymer are taken to be 100 mass% is preferably 10 mass% or more, and more preferably 30 mass% or more, and is preferably 55 mass% or less. When the proportional content of the nitrile group-containing monomer unit in the polymer is within any of the ranges set forth above, dispersibility of a conductive material can be further increased in a conductive material dispersion liquid or a slurry for an electrode.

[Alkylene structural unit]

The alkylene structural unit is a repeating unit composed only of an alkylene structure represented by a general formula $-C_nH_{2n}-$ (n is an integer of 2 or more).

Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which the alkylene structural unit is introduced into the polymer. For example, either of the following methods (1) or (2) may be adopted.

(1) A method in which a polymer is produced from a monomer composition containing a conjugated diene monomer and then this polymer is hydrogenated so as to convert a conjugated diene monomer unit to an alkylene structural unit

(2) A method in which a polymer is produced from a monomer composition containing a 1-olefin monomer

Of these methods, method (1) is preferable in terms of ease of production of the polymer.

The conjugated diene monomer may be a conjugated diene compound having a carbon number of 4 or more such as 1,3-butadiene, isoprene, 2,3-dimethyl-1,3-butadiene, 2-ethyl-1,3-butadiene, or 1,3-pentadiene, for example. Of these conjugated diene monomers, conjugated diene compounds having a carbon number of 4 or more are preferable, and 1,3-butadiene is more preferable.

In other words, the alkylene structural unit is preferably a structural unit obtained through hydrogenation of a conjugated diene monomer unit (i.e., is preferably a hydrogenated conjugated diene unit), is more preferably a structural unit obtained through hydrogenation of a conjugated diene monomer unit having a carbon number of 4 or more (i.e., is more preferably a hydrogenated conjugated diene unit having a carbon number of 4 or more), and is even more preferably a structural unit obtained through hydrogenation of a 1,3-butadiene monomer unit (i.e., is even more preferably a hydrogenated 1,3-butadiene unit).

The 1-olefin monomer may be ethylene, propylene, 1-butene, or the like, for example.

Note that one conjugated diene monomer or 1-olefin monomer can be used individually, or two or more conjugated diene monomers or 1-olefin monomers can be used in combination in a freely selected ratio.

The proportional content of the alkylene structural unit in the polymer when all repeating units (total of monomer units and structural units) in the polymer are taken to be 100 mass% is preferably 30 mass% or more, more preferably 40 mass% or more, and even more preferably 50 mass% or more, and is preferably 90 mass% or less, more preferably 85 mass% or less, and even more preferably 80 mass% or less. When the proportional content of the alkylene structural unit in the polymer is within any of the ranges set forth above, dispersibility of a conductive material can be even further increased in a conductive material dispersion liquid or a slurry for an electrode.

[Hydrophilic group-containing monomer unit]

The hydrophilic group-containing monomer unit is a repeating unit that is derived from a hydrophilic group-containing monomer. Examples of hydrophilic group-containing monomers that can form the hydrophilic group-containing monomer unit include carboxyl group-containing monomers, hydroxyl group-containing monomers, sulfo group-containing monomers, and phosphate group-containing monomers.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxyl group upon hydrolysis can also be used as a carboxyl group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of hydroxyl group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: $CH_2=CR_1\text{-}COO\text{-}(C_qH_{2q}O)_p\text{-}H$ (where p represents an integer of 2 to 9, q represents an integer of 2 to 4, and $R_1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

Note that in the present disclosure, "(meth)allyl" indicates "allyl" and/or "methallyl", and "(meth)acryloyl" indicates "acryloyl" and/or "methacryloyl".

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Of these hydrophilic group-containing monomers, carboxyl group-containing monomers, hydroxyl group-containing monomers, and sulfo group-containing monomers are preferable from a viewpoint of ensuring dispersibility of a conductive material while also increasing dispersibility of an electrode active material in a slurry for an electrode and a viewpoint of improving close adherence of an electrode mixed material layer to a current collector, with carboxyl group-containing monomers and hydroxyl group-containing monomers being more preferable.

Note that one hydrophilic group-containing monomer can be used individually, or two or more hydrophilic group-containing monomers can be used in combination in a freely selected ratio.

The proportional content of the hydrophilic group-containing monomer unit in the polymer when all repeating units (total of monomer units and structural units) in the polymer are taken to be 100 mass% is preferably 5 mass% or more, and more preferably 10 mass% or more, and is preferably 30 mass% or less. When the proportional content of the hydrophilic group-containing monomer unit is not less than any of the lower limits set forth above, dispersibility of a conductive material can be ensured while also causing good dispersion of an electrode active material in a slurry for an electrode. Moreover, when the proportional content of the hydrophilic group-containing monomer unit in the polymer is not more than the upper limit set forth above, degradation caused by unevenness and charge concentration in an electrode mixed material layer can be inhibited without excessive loss of conductive material dispersibility.

[Other monomer units]

Examples of other monomer units that can be included in the polymer include, but are not specifically limited to, a (meth)acrylic acid ester monomer unit and an aromatic vinyl monomer unit. Of these examples, a (meth)acrylic acid ester monomer unit is preferable as another monomer unit.

Examples of (meth)acrylic acid ester monomers that can form the (meth)acrylic acid ester monomer unit include (meth)acrylic acid alkyl ester monomers in which the number of ethylenically unsaturated bonds is one. The (meth)acrylic acid alkyl ester monomer may be a monomer that includes a linear alkyl group or may be a monomer that includes a branched alkyl group. For example, the (meth)acrylic acid ester monomer may be an acrylic acid alkyl ester such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, or stearyl acrylate; a methacrylic acid alkyl ester such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, or stearyl methacrylate; or the like. Of these (meth)acrylic acid ester monomers, (meth)acrylic acid alkyl esters in which the alkyl group is a linear alkyl group are preferable from a viewpoint of imparting a suitable degree of affinity with electrolyte solution to an obtained electrode mixed material layer, with butyl acrylate and methyl methacrylate being more preferable.

Examples of aromatic vinyl monomers that can form the aromatic vinyl monomer unit include styrene, styrene sulfonic acid and salts thereof, α-methylstyrene, p-t-butylstyrene, butoxystyrene, vinyltoluene, chlorostyrene, and vinylnaphthalene. Of these examples, styrene is preferable as an aromatic vinyl monomer from a viewpoint of further increasing dispersibility of a conductive material dispersion liquid.

One monomer that can form another monomer unit can be used individually, or two or more monomers that can form other monomer units can be used in combination in a freely selected ratio.

The proportional content of other monomer units in the polymer when the amount of all repeating units (total of monomer units and structural units) in the polymer is taken to be 100 mass% is preferably 10 mass% or less, more preferably 5 mass% or less, and particularly preferably 0 mass% (i.e., it is particularly preferable that the polymer only includes the nitrile group-containing monomer unit, the alkylene structural unit, and the hydrophilic group-containing monomer unit).

[Iodine value]

The iodine value of the polymer is preferably 120 mg/100 mg or less, more preferably 100 mg/100 mg or less, and even more preferably 60 mg/100 mg or less. When the iodine value of the polymer is 120 mg/100 mg or less, device characteristics of an electrochemical device can be improved by using the presently disclosed binder composition. The lower limit for the iodine value of the polymer is not specifically limited and may be 1 mg/100 mg or more, for example.

Note that the "iodine value" referred to in the present disclosure can be measured by a method described in the EXAMPLES section.

[Weight-average molecular weight]

The weight-average molecular weight of the polymer is preferably 10,000 or more, and preferably 15,000 or more, and is preferably 100,000 or less, more preferably 80,000 or less, and even more preferably 50,000 or less. When the weight-average molecular weight of the polymer is within any of the ranges set forth above, the viscosity of the binder composition can be stabilized.

Note that the "weight-average molecular weight" referred to in the present disclosure can be measured by a method described in the EXAMPLES section.

[Production method of polymer]

No specific limitations are placed on the method by which the above-described polymer is produced. For example, the polymer can be produced by polymerizing a monomer composition containing the above-described monomers, optionally in the presence of a chain transfer agent such as t-dodecyl mercaptan, to obtain a polymer, and subsequently hydrogenating the obtained polymer.

The proportional content of each monomer in the monomer composition that is used to produce the polymer can be set in accordance with the proportional content of each repeating unit in the polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

The method by which the polymer is hydrogenated is not specifically limited and can be a typical method using a catalyst such as oil-layer hydrogenation, water-layer direct hydrogenation, or water-layer indirect hydrogenation (for example, refer to WO2013/080989A1).

<Triphenylphosphine sulfide>

The content of triphenylphosphine sulfide in the presently disclosed binder composition is 2 mass ppm or more, preferably 3 mass ppm or more, and more preferably 5 mass ppm or more relative to the content of the polymer, and is 100 mass ppm or less, preferably 90 mass ppm or less, and more preferably 60 mass ppm or less relative to the content of the polymer. When the content of triphenylphosphine sulfide is not less than any of the lower limits set forth above relative to the content of the polymer, dispersibility of a conductive material can be improved in a conductive material dispersion liquid or slurry for an electrode that is obtained using the binder composition, and gas evolution in an electrode can be sufficiently reduced. Moreover, when the content of triphenylphosphine sulfide is not more than any of the upper limits set forth above relative to the content of the polymer, peel strength of an electrode can be sufficiently increased.

As previously described, the presently disclosed binder composition satisfies the following relationship formula when the content of triphenylphosphine sulfide relative to the content of the polymer is taken to be (a) and the content of the hydrophilic group-containing monomer unit relative to the content of the polymer is taken to be (b).

$$0.004(\%) \leq \{(a)/(b)\} \times 100(\%) \leq 0.150(\%)$$

The value represented by $\{(a)/(b)\} \times 100(\%)$ in the preceding relationship formula is preferably 0.005(%) or more, and more preferably 0.040(%) or more, and is preferably 0.130(%) or less, and more preferably 0.100(%) or less. When the value represented by $\{(a)/(b)\} \times 100(\%)$ is 0.004(%) or more, dispersibility of a conductive material can be sufficiently increase in a conductive material dispersion liquid that is obtained using the binder composition. Moreover, when the value represented by $\{(a)/(b)\} \times 100(\%)$ is 0.150(%) or less, gas evolution can be sufficiently reduced in an electrode that is produced using the binder composition.

<Other components>

No specific limitations are placed on other components that the presently disclosed binder composition can contain besides the polymer, NMP, and triphenylphosphine sulfide. Examples of other components include binders other than the polymer (polyvinylidene fluoride, polyacrylate, etc.), reinforcing materials, leveling agents, viscosity modifiers, and additives for electrolyte solution. These other components are not specifically limited so long as they do not affect battery reactions and can be selected from commonly known components such as those described in WO2012/115096A1. Moreover, the presently disclosed binder composition may contain a solvent other than NMP.

Note that one of these other components may be used individually, or two or more of these other components may be used in combination in a freely selected ratio.

Furthermore, the presently disclosed binder composition may contain monovalent cations. In this case, the content of monovalent cations contained in the binder composition is preferably 100 mass ppm or less, more preferably 90 mass ppm or less, and preferably 60 mass ppm or less relative to the content of the polymer. When the content of monovalent cations contained in the binder composition is 100 mass ppm or less relative to the content of the polymer, cross-linking of hydrophilic group-containing monomer units in the polymer via monovalent cations can be inhibited, thereby enabling stabilization of viscosity of the binder composition.

Note that the monovalent cations may, for example, originate from a component that can be used in production of the polymer. Moreover, the monovalent cations may be potassium (K), sodium (Na), or the like, for example, without any specific limitations.

<Production method of binder composition for electrochemical device>

The presently disclosed binder composition can be produced by producing the polymer according to the production method of the polymer described above, subsequently adding triphenylphosphine sulfide and NMP and performing mixing thereof, and then removing a solvent that was used in production of the polymer, for example, but is not specifically limited to being produced in this manner. Note that in a case in which other components such as previously described are compounded, these other components may be mixed by a known method before or after removal of the solvent. Mixing can be performed by a known mixing method without any specific limitations.

(Conductive material dispersion liquid for electrochemical device)

The presently disclosed conductive material dispersion liquid for an electrochemical device (hereinafter, also referred to simply as a "conductive material dispersion liquid") contains at least the presently disclosed binder composition set forth above and a conductive material and may optionally further contain other components.

The presently disclosed conductive material dispersion liquid has sufficiently high conductive material dispersibility as a result of containing the presently disclosed binder composition. Moreover, as a result of the presently disclosed conductive material dispersion liquid containing the presently disclosed binder composition, an electrode having excellent peel strength and reduced gas evolution can be produced by using this conductive material dispersion liquid.

Note that the presently disclosed conductive material dispersion liquid is an intermediate product for producing the presently disclosed slurry for an electrochemical device electrode described further below and does not normally contain an electrode active material.

Moreover, the polymer and triphenylphosphine sulfide that are contained in the presently disclosed conductive material dispersion liquid originate from the presently disclosed binder composition and the preferred ratio thereof is the same as in the presently disclosed binder composition.

<Conductive material>

Examples of conductive materials that can be used include, but are not specifically limited to, conductive carbon materials such as carbon black (for example, acetylene black, Ketjenblack® (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven sheet obtained through pyrolysis of non-woven fabric formed of polymer fiber; and fibers, foils, etc. of various metals. One of these conductive materials may be used individually, or two or more of these conductive materials may be used in combination.

Of these examples, carbon nanotubes (hereinafter, also abbreviated as "CNTs") are preferable as the conductive material from a viewpoint of reducing resistance of an electrode mixed material layer and obtaining an electrochemical device having further improved device characteristics.

The CNTs can be CNTs synthesized by a known CNT synthesis method such as arc discharge, laser ablation, or chemical vapor deposition (CVD) without any specific limitations.

The BET specific surface area of the CNTs is preferably 100 $m^2$/g or more, more preferably 150 $m^2$/g or more, and even more preferably 200 $m^2$/g or more, and is preferably 2,500 $m^2$/g or less.

Note that the "BET specific surface area" referred to in the present disclosure is the nitrogen adsorption specific surface area measured by the BET method and can be measured in accordance with ASTM D3037-81.

<Other components>

Examples of other components that can be contained in the conductive material dispersion liquid include, but are not specifically limited to, the same components as other components that can be contained in the presently disclosed binder composition. Note that one other component may be used individually, or two or more other components may be used in combination in a freely selected ratio.

<Ratio of binder composition and conductive material in conductive material dispersion liquid>

No specific limitations are placed on the quantitative ratio of the binder composition and the conductive material when the binder composition and the conductive material are mixed to obtain the conductive material dispersion liquid. For example, the conductive material and the binder composition may be mixed in a quantitative ratio such that the obtained conductive material dispersion liquid preferably contains not less than 10 parts by mass and not more than 100 parts by mass of the polymer per 100 parts by mass of the conductive material, and preferably contains not less than 15 parts by mass and not more than 50 parts by mass of the polymer per 100 parts by mass of the conductive material.

<Production method of conductive material dispersion liquid>

The presently disclosed conductive material dispersion liquid can be produced by mixing the above-described components by a known method.
Note that the mixing can be performed by a mixer such as a ball mill, a sand mill, a bead mill, a pigment disperser, a grinding machine, an ultrasonic disperser, a homogenizer, a planetary mixer, or a FILMIX, for example.
The solid content concentration of the conductive material dispersion liquid can, for example, be not less than 1 mass% and not more than 25 mass%.

(Slurry for electrochemical device electrode)

The presently disclosed slurry for an electrochemical device electrode (hereinafter, also referred to simply as a "slurry for an electrode") is a composition that contains the presently disclosed conductive material dispersion liquid set forth above and an electrode active material. In other words, the presently disclosed slurry for an electrode contains a polymer, triphenylphosphine sulfide, NMP, a conductive material, and an electrode active material and may optionally contain other components such as previously described.
As a result of the presently disclosed slurry composition for an electrode containing the presently disclosed conductive material dispersion liquid, it is possible to produce an electrode having excellent peel strength and reduced gas evolution by using the slurry for an electrode.
Note that the polymer, triphenylphosphine sulfide, and conductive material that are contained in the presently disclosed slurry for an electrode originate from the presently disclosed binder composition and conductive material dispersion liquid and that the preferred ratio thereof is the same as in the presently disclosed binder composition and conductive material dispersion liquid.
Although the following describes, as one example, a case in which the presently disclosed slurry for an electrode is a slurry for a lithium ion secondary battery electrode, the presently disclosed slurry for an electrode is not limited to the following example.

<Electrode active material>

A known electrode active material can be used as the electrode active material (positive electrode active material or negative electrode active material) that is compounded in the slurry for an electrode without any specific limitations.
For example, a positive electrode active material that is used in a lithium ion secondary battery may be a metal oxide that includes lithium (Li), but is not specifically limited thereto. Moreover, the positive electrode active material is preferably a positive electrode active material that includes one or more selected from the group consisting of cobalt (Co), nickel (Ni), manganese (Mn), and iron (Fe) in addition to lithium (Li). Examples of such positive electrode active materials include lithium-containing cobalt oxide ($LiCoO_2$), lithium manganate ($LiMn_2O_4$), lithium-containing nickel oxide ($LiNiO_2$), lithium-containing complex oxides of Co-Ni-Mn, lithium-containing complex oxides of Ni-Mn-Al, lithium-containing complex oxides of Ni-Co-Al, olivine-type lithium manganese phosphate ($LiMnPO_4$), olivine-type lithium iron phosphate ($LiFePO_4$), lithium-rich spinel compounds represented by $Li_{1+x}Mn_{2-x}O_4$ ($0 < x < 2$), $Li[Ni_{0.17}Li_{0.2}Co_{0.07}Mn_{0.56}]O_2$, $LiNi_{0.5}Mn_{1.5}O_4$, and $Li[Ni_{0.5}Co_{0.2}Mn_{0.3}]O_2$.
Note that one electrode active material can be used individually, or two or more electrode active materials can be used in combination in a freely selected ratio.
Moreover, the particle diameter of the electrode active material is not specifically limited and may be the same as that of a conventionally used electrode active material.
Furthermore, the amount of the electrode active material in the slurry for an electrode is not specifically limited and can be set within a conventionally used range.

<Production method of slurry for electrochemical device electrode>

No specific limitations are placed on the method by which the presently disclosed slurry for an electrode is produced. The slurry for an electrode can be produced by mixing the presently disclosed conductive material dispersion liquid and the electrode active material.
Note that the mixing method can be any of the same mixing methods as for production of the presently disclosed conductive material dispersion liquid set forth above without any specific limitations.

(Electrode for electrochemical device)

The presently disclosed electrode for an electrochemical device (hereinafter, also referred to simply as an "electrode") includes an electrode mixed material layer formed using the presently disclosed slurry for an electrode set forth above. More specifically, the presently disclosed electrode normally includes the electrode mixed material layer on a current collector.
Moreover, the presently disclosed electrode has excellent peel strength and reduced gas evolution as a result of the electrode mixed material layer being formed from the presently disclosed slurry for an electrode set forth above.

<Current collector>

The current collector is formed of a material having electrical conductivity and electrochemical durability. A known current collector can be used as the current collector without any specific limitations. For example, a current collector that is formed of aluminum or an aluminum alloy can be used as a current collector included in a positive electrode of a lithium ion secondary battery. Moreover, aluminum and an aluminum alloy may be used in combination, or different types of aluminum alloys may be used in combination. Aluminum and aluminum alloys are excellent current collector materials due to having heat resistance and electrochemical stability.

<Production method of electrode for electrochemical device>

No specific limitations are placed on the method by which the presently disclosed electrode is produced. For example, the presently disclosed electrode can be produced by applying the presently disclosed slurry for an electrode set forth above onto at least one side of the current collector and drying the slurry for an electrode to form an electrode mixed material layer. In more detail, this production method includes a step of applying the presently disclosed slurry for an electrode onto at least one side of the current collector (application step) and a step of drying the slurry for an electrode that has been applied onto at least one side of the current collector to form an electrode mixed material layer on the current collector (drying step).

[Application step]

The presently disclosed slurry for an electrode can be applied onto the current collector by any commonly known method without any specific limitations. Specific examples of application methods that can be used include comma coating, doctor blading, dip coating, reverse roll coating, direct roll coating, gravure coating, extrusion coating, and brush coating. In the application, the slurry for an electrode may be applied onto just one side of the current collector or may be applied onto both sides of the current collector. The thickness of a film of the slurry for an electrode on the current collector after application but before drying can be set as appropriate in accordance with the thickness of the electrode mixed material layer to be obtained after drying.

[Drying step]

The slurry for an electrode on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry for an electrode on the current collector as described above, an electrode mixed material layer is formed on the current collector, thereby providing an electrode for an electrochemical device that includes the current collector and the electrode mixed material layer.
After the drying step, the electrode mixed material layer may be further subjected to a pressing process, such as mold pressing or roll pressing. The pressing process can further improve binding capacity of the electrode mixed material layer and the current collector.

(Electrochemical device)

The presently disclosed electrochemical device includes the presently disclosed electrode for an electrochemical device set forth above. Moreover, the presently disclosed electrochemical device has excellent device characteristics as a result of including the presently disclosed electrode for an electrochemical device. Note that the presently disclosed electrochemical device can be an electric double-layer capacitor or a non-aqueous secondary battery such as a lithium ion secondary battery, for example. Of these examples, the presently disclosed electrochemical device is preferably a non-aqueous secondary battery, and more preferably a lithium ion secondary battery.

The following describes a lithium ion secondary battery as one example of the presently disclosed electrochemical device. This lithium ion secondary battery includes a positive electrode, a negative electrode, an electrolyte solution, and a separator. The presently disclosed electrode is used as at least one of the positive electrode and the negative electrode.

<Electrodes>

A known electrode can be used without any specific limitations as an electrode other than the presently disclosed electrode set forth above that can be used in the lithium ion secondary battery that is an example of the presently disclosed electrochemical device.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and display a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate. Moreover, a known additive such as vinylene carbonate (VC), fluoroethylene carbonate (FEC), or ethyl methyl sulfone may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery that is an example of the electrochemical device can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In order to prevent pressure increase inside the lithium ion secondary battery and occurrence of overcharging or overdischarging, an overcurrent preventing device such as a fuse or a PTC device, an expanded metal, or a lead plate may be provided as necessary. The shape of the lithium ion secondary battery may be a coin type, a button type, a sheet type, a cylinder type, a prismatic type, a flat type, or the like.

EXAMPLES

The following provides a more specific description of the present disclosure based on examples. However, the present disclosure is not limited to the following examples. In the following description, "%", "ppm", and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Furthermore, in a case in which the polymer is a hydrogenated polymer obtained through hydrogenation of a polymerized product including conjugated diene monomer units, the total proportional content of non-hydrogenated conjugated diene monomer units and alkylene structural units that are hydrogenated conjugated diene monomer units in the hydrogenated polymer is the same as the ratio (charging ratio) of a conjugated diene monomer among all monomers used in polymerization of the polymerized product.

Various measurements and evaluations in the examples and comparative examples were performed according to the following methods.

<Iodine value>

The iodine value of a polymer was measured in accordance with JIS K6235.

<Weight-average molecular weight>

The weight-average molecular weight (Mw) of a polymer was measured by gel permeation chromatography (GPC) under the following measurement conditions using a LiBr-DMF solution of 10 mM in concentration.

- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK standard polystyrene (produced by Tosoh Corporation)

<Value of $\{(a)/(b)\} \times 100[\%]$>

The contents of a polymer and triphenylphosphine sulfide in a binder composition produced in each example or comparative example were used to determine the content (a) of triphenylphosphine sulfide relative to the content of the polymer and the content (b) of a hydrophilic group-containing monomer unit in the polymer relative to the content of the polymer. A value of $\{(a)/(b)\} \times 100[\%]$ was then calculated.

<Content of monovalent cations>

Approximately 0.5 g of a binder composition, in terms of solid content, was sampled, and this sample was dissolved in approximately 7 mL of concentrated sulfuric acid. Thereafter, approximately 3 mL of concentrated nitric acid was gradually added to cause wet decomposition. After decomposition, the acid was concentrated, the volume was adjusted to 10 mL with ultrapure water, and the amounts of potassium ions and sodium ions were measured by inductively coupled plasma atomic emission spectroscopy (ICP-AES). The total amount of potassium and sodium contained in the binder composition was calculated from the measured values, and the determined total amount was taken to be the amount of monovalent cations contained in the binder composition. In addition, the content of monovalent cations relative to the content of a polymer A in the binder composition was determined.

<Binder viscosity change rate>

With respect to a binder composition produced in each example or comparative example, the binder was measured by a single-cylinder rotational viscometer (25°C, rotation speed: 60 rpm; spindle shape: 4) in accordance with JIS Z8803:1991 at 1 hour after slurry production, a value at 1 minute after the start of measurement was determined, and this value was taken to be the viscosity ($\eta_0$) of the binder composition. In addition, a value for the viscosity of the binder composition at 1 week after binder composition production was determined, and this value was taken to be the viscosity ($\eta_1$) of the binder composition.

A binder viscosity change rate was calculated by the following formula and was evaluated by the following standard. A smaller binder viscosity change rate indicates that the binder composition has better viscosity stability.

$$\text{Binder viscosity change rate (\%)} = \{(\eta_1/\eta_0)\} \times 100$$

A: Binder viscosity change rate of less than 10%
B: Binder viscosity change rate of not less than 10% and less than 30%
C: Binder viscosity change rate of 30% or more

<Dispersibility of conductive material>

With respect to a conductive material dispersion liquid produced in each example or comparative example, the viscosity was measured by a rheometer (MCR 302 produced by Anton Paar) under conditions of a temperature of 25°C and a shear rate of 2.5 $s^{-1}$. This viscosity was used to evaluate dispersibility of the conductive material dispersion liquid by the following standard. At the same solid content concentration (or at a solid content concentration of an extremely close value), a lower conductive material dispersion liquid viscosity indicates better dispersion of a conductive material.

A: Viscosity of less than 1,000 mPa·s
B: Viscosity of not less than 1,000 mPa·s and less than 3,000 mPa·s
C: Viscosity of not less than 3,000 mPa·s and less than 10,000 mPa·s
D: Viscosity of 10,000 mPa·s or more

<Peel strength>

A rectangle of 100 mm in length and 10 mm in width was cut out from a positive electrode for a lithium ion secondary battery produced in each example or comparative example to obtain a test specimen. The test specimen was placed with the surface where a positive electrode mixed material layer was located facing downward, and cellophane tape (tape in accordance with JIS Z1522) was affixed to the surface of the positive electrode mixed material layer. One end of the current collector was pulled in a perpendicular direction at a pulling speed of 100 mm/min to peel off the current collector, and the stress during this peeling was measured (note that the cellophane tape was fixed to a test stage). Three measurements were made in this manner. An average value of the measurements was determined, was taken to be the peel strength, and was evaluated by the following standard. A larger value for the peel strength indicates better close adherence between the positive electrode mixed material layer and the current collector.

A: Peel strength of 30 N/m or more
B: Peel strength of not less than 25 N/m and less than 30 N/m
C: Peel strength of not less than 20 N/m and less than 25 N/m
D: Peel strength of less than 20 N/m

<Gas evolution of electrode>

A secondary battery produced in each example or comparative example was left at rest in a 25°C environment for 24 hours. Thereafter, the secondary battery was subjected to a charge/discharge operation of charging to 4.35 V at 0.1C and discharging to 2.75 V at 0.1C in a 25°C environment. A cell of this battery was immersed in liquid paraffin, and the volume X0 of the cell was measured. A further 1,000 cycles of the charge/discharge operation were performed under the same conditions as described above in a 60°C environment. A cell of the battery after 1,000 cycles was immersed in liquid paraffin, and the volume X1 of the cell was measured. A cell volume change rate $\Delta X$ between before and after the high-temperature cycling test in which charging and discharging were repeated for 1,000 cycles was calculated by the following formula and was evaluated by the following standard. A smaller value for this cell volume change rate $\Delta X$ indicates that there is less gas evolution from an electrode and that the electrode has better ability to suppress gas evolution.

$$\text{Cell volume change rate } \Delta X(\%) = (X1 - X0)/X0 \times 100$$

A: Cell volume change rate of less than 20%
B: Cell volume change rate of not less than 20% and less than 30%
C: Cell volume change rate of not less than 30% and less than 40%
D: Cell volume change rate of 40% or more

(Example 1)

<Production of polymer>

A reactor was charged with 200 parts of deionized water, 25 parts of sodium dodecylbenzenesulfonate aqueous solution of 10% in concentration, 30 parts of acrylonitrile as a nitrile group-containing monomer, 10 parts of methacrylic acid as a hydrophilic group-containing monomer, and 2.50 parts of t-dodecyl mercaptan as a chain transfer agent in this order. Next, gas inside of the reactor was purged three times with nitrogen, and then 60 parts of 1,3-butadiene as a conjugated diene monomer was charged to the reactor. The reactor was held at 10°C while 0.03 parts of cumene hydroperoxide as a polymerization initiator and appropriate amounts of a reductant and a chelating agent were charged. A polymerization reaction was continued under stirring until the polymerization conversion rate reached 80%, at which point, 0.1 parts of hydroquinone aqueous solution of 10% in concentration was added as a polymerization inhibitor to stop the polymerization reaction. Next, residual monomer was removed at a water temperature of 80°C to yield a water dispersion of a precursor of a polymer.

The obtained water dispersion of the polymer precursor and a palladium catalyst (solution obtained by mixing 1% palladium acetate acetone solution with an equal weight of deionized water) were added into an autoclave such that the palladium content was 3,000 ppm relative to the weight of solid content contained in the water dispersion, and a hydrogenation reaction was performed at a hydrogen pressure of 3 MPa and a temperature of 55°C for 3 hours to yield a reaction liquid. A strong acid cation exchange resin (C100 produced by Purolite) was added to the obtained reaction liquid in the same number of parts by mass as the mass of solid content contained in the liquid, 2 hours of stirring was performed at room temperature (25°C) using a shaker, and then filtration was performed using 200-mesh filter cloth to yield a water dispersion of a target polymer (hydrogenated nitrile rubber). Thereafter, the water dispersion was concentrated to a solid content concentration of 40% using an evaporator.

<Production of binder composition>

After adding together 50 parts (equivalent to 20 parts of solid content) of the water dispersion of the polymer, 0.0010 parts (50 ppm relative to the amount of the polymer) of triphenylphosphine sulfide, and 300 parts of N-methyl-2-pyrrolidone (NMP) and completely evaporating water under reduced pressure, NMP was also evaporated to yield a binder composition having a polymer concentration of 8% as a binder composition. The obtained binder composition was used to evaluate the iodine value of the polymer, the weight-average molecular weight, the value of $\{(a)/(b)\} \times 100(\%)$, the content of monovalent cations, and the binder viscosity change rate. The results are shown in Table 1.

<Production of conductive material dispersion liquid>

A disper blade was used to stir (3,000 rpm, 10 minutes) 4.0 parts of carbon nanotubes (specific surface area: 280 $m^2/g$) as a conductive material, 1.0 parts (in terms of solid content) of the binder composition obtained as described above, and NMP in an amount such that the total combined with the amount of NMP contained in the binder composition was 100 parts, and then a thin-film spin system high-speed mixer (produced by PRIMIX Corporation; product name: FILMIX, model 56-50) was used to perform 10 minutes of dispersing treatment at a circumferential speed of 40 m/s to produce a conductive material dispersion liquid having a solid content concentration of 5.0%. The obtained conductive material dispersion liquid was used to evaluate the dispersibility of the conductive material. The result is shown in Table 1.

<Production of slurry for positive electrode>

A slurry for a positive electrode was produced by adding together 98.0 parts of a ternary active material ($LiNi_{0.6}Co_{0.2}Mn_{0.2}O_2$) having a layered structure (volume-average particle diameter: 10 $\mu$m) as a positive electrode active material, 1.0 parts of polyvinylidene fluoride as a binder, 1.0 parts (in terms of solid content) of the conductive material dispersion liquid obtained as described above, and NMP and mixing (60 rpm, 30 minutes) these materials in a planetary mixer. Note that the additive amount of NMP was adjusted such that the viscosity of the obtained slurry for a positive electrode (measured by single-cylinder rotational viscometer in accordance with JIS Z8803:1991; temperature: 25°C; rotation speed: 60 rpm) was within a range of 4,000 mPa·s to 5,000 mPa·s.

<Production of positive electrode>

Aluminum foil of 20 $\mu$m in thickness was prepared as a current collector. The slurry for a positive electrode obtained as described above was applied onto one side of the aluminum foil by a comma coater such as to have a coating weight after drying of 20 mg/cm$^2$, was dried at 90°C for 20 minutes and at 120°C for 20 minutes, and was subsequently heat treated at 60°C for 10 hours to obtain a positive electrode web. This positive electrode web was rolled by roll pressing to produce a sheet-shaped positive electrode including the aluminum foil and a positive electrode mixed material layer (density: 3.2 g/cm$^3$). The sheet-shaped positive electrode was cut to 48.0 mm in width and 47 cm in length to obtain a positive electrode for a lithium ion secondary battery. Peel strength was evaluated for this positive electrode. The result is shown in Table 1.

<Production of negative electrode>

A slurry for a negative electrode was produced by stirring a mixture of 90 parts of spherical artificial graphite (volume-average particle diameter: 12 $\mu$m) and 10 parts of $SiO_x$ (volume-average particle diameter: 10 $\mu$m) as a negative electrode active material, 1 part of a styrene butadiene polymer as a binder for a negative electrode, 1 part of carboxymethyl cellulose as a thickener, and an appropriate amount of water as a dispersion medium in a planetary mixer.
Next, copper foil of 15 $\mu$m in thickness was prepared as a current collector. The slurry for a negative electrode obtained as described above was applied onto one side of the copper foil such as to have a coating weight after drying of 10 mg/cm$^2$ and was dried at 60°C for 20 minutes and at 120°C for 20 minutes. Thereafter, 2 hours of heat treatment was performed at 150°C to obtain a negative electrode web. The negative electrode web was rolled by roll pressing to produce a sheet-shaped negative electrode including the copper foil and a negative electrode mixed material layer of 1.6 g/cm$^3$ in density. The sheet-shaped negative electrode was cut to 50.0 mm in width and 52 cm in length to obtain a negative electrode for a lithium ion secondary battery.

<Production of lithium ion secondary battery>

The positive electrode and negative electrode produced as described above were wound up using a core of 20 mm in diameter with the respective electrode mixed material layers thereof facing each other and with a separator (microporous membrane made of polypropylene) of 15 $\mu$m in thickness interposed therebetween to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.
In addition, an electrolyte solution (LiPF$_6$ solution of 1.0 M in concentration (solvent: mixed solution of 5 mass% of fluoroethylene carbonate added to mixed solvent of ethylene carbonate/ethyl methyl carbonate = 3/7 (mass ratio); additive: 2 volume% of vinylene carbonate)) was prepared.
The compressed roll was subsequently housed in a laminate case made of aluminum together with 3.2 g of the electrolyte solution. After connecting a nickel lead to a specific position of the negative electrode for a lithium ion secondary battery and connecting an aluminum lead to a specific position of the positive electrode for a lithium ion secondary battery, an opening of the case was thermally sealed to obtain a lithium ion secondary battery. This lithium ion secondary battery had a pouch shape of 35 mm in width, 60 mm in height, and 5 mm in thickness, and the nominal capacity of the battery was 700 mAh.
Gas evolution of an electrode was evaluated for the obtained lithium ion secondary battery. The result is shown in Table 1.

(Example 2)

A binder composition, a conductive material dispersion liquid, a slurry for a positive electrode, a positive electrode, a negative electrode, and a lithium ion secondary battery were produced in the same way as in Example 1 with the exception that the amount of triphenylphosphine sulfide was changed to 0.0018 parts (90 ppm relative to the amount of the polymer) in production of the binder composition. Various evaluations were also performed in the same way as in Example 1. The results are shown in Table 1.

(Example 3)

A binder composition, a conductive material dispersion liquid, a slurry for a positive electrode, a positive electrode, a negative electrode, and a lithium ion secondary battery were produced in the same way as in Example 1 with the exception that the amount of triphenylphosphine sulfide was changed to 0.0001 parts (5 ppm relative to the amount of the polymer) in production of the binder composition. Various evaluations were also performed in the same way as in Example 1. The results are shown in Table 1.

(Example 4)

A binder composition, a conductive material dispersion liquid, a slurry for a positive electrode, a positive electrode, a negative electrode, and a lithium ion secondary battery were produced in the same way as in Example 1 with the exception that the amount of the strong acid cation exchange resin (C100 produced by Purolite) was changed to 0.5 parts by mass in production of the polymer. Various evaluations were also performed in the same way as in Example 1. The results are shown in Table 1.

(Example 5)

A binder composition, a conductive material dispersion liquid, a slurry for a positive electrode, a positive electrode, a negative electrode, and a lithium ion secondary battery were produced in the same way as in Example 1 with the exception that the amount of acrylonitrile was changed to 31 parts, the amount of methacrylic acid was changed to 7 parts, the amount of 1,3-butadiene was changed to 62 parts, and the amount of triphenylphosphine sulfide was changed to 0.0018 parts (90 ppm relative to the amount of the polymer) in production of the polymer. Various evaluations were also performed in the same way as in Example 1. The results are shown in Table 1.

(Example 6)

A binder composition, a conductive material dispersion liquid, a slurry for a positive electrode, a positive electrode, a negative electrode, and a lithium ion secondary battery were produced in the same way as in Example 1 with the exception that the amount of the strong acid cation exchange resin (C100 produced by Purolite) was changed to 0.2 parts by mass in production of the polymer. Various evaluations were also performed in the same way as in Example 1. The results are shown in Table 1.

(Comparative Example 1)

A binder composition, a conductive material dispersion liquid, a slurry for a positive electrode, a positive electrode, a negative electrode, and a lithium ion secondary battery were produced in the same way as in Example 1 with the exception that triphenylphosphine sulfide was not used in production of the binder composition. Various evaluations were also performed in the same way as in Example 1. The results are shown in Table 1.

(Comparative Example 2)

A binder composition, a conductive material dispersion liquid, a slurry for a positive electrode, a positive electrode, a negative electrode, and a lithium ion secondary battery were produced in the same way as in Example 1 with the exception that the amount of triphenylphosphine sulfide was changed to 0.0032 parts (160 ppm relative to the amount of the nitrile polymer) in production of the binder composition. Various evaluations were also performed in the same way as in Example 1. The results are shown in Table 1.

(Comparative Example 3)

A binder composition, a conductive material dispersion liquid, a slurry for a positive electrode, a positive electrode, a negative electrode, and a lithium ion secondary battery were produced in the same way as in Example 1 with the exception that the amount of acrylonitrile was changed to 24 parts, the amount of methacrylic acid was changed to 30 parts, the amount of 1,3-butadiene was changed to 46 parts, and the amount of triphenylphosphine sulfide was changed to 0.0002 parts (10 ppm relative to the amount of the nitrile polymer) in production of the polymer. Various evaluations were also performed in the same way as in Example 1. The results are shown in Table 1.

(Comparative Example 4)

A binder composition, a conductive material dispersion liquid, a slurry for a positive electrode, a positive electrode, a negative electrode, and a lithium ion secondary battery were produced in the same way as in Example 1 with the exception that the amount of acrylonitrile was changed to 40 parts and the amount of methacrylic acid was changed to 0 parts in production of the polymer. Various evaluations were also performed in the same way as in Example 1. The results are shown in Table 1.

[Table 1]

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Polymer | Nitrile group-containing monomer unit [mass%] | 30 | 30 | 30 | 30 | 31 | 30 | 30 | 30 | 24 | 40 |
| | Alkylene structural unit + conjugated diene monomer unit [mass%] | 60 | 60 | 60 | 60 | 62 | 60 | 60 | 60 | 46 | 60 |
| | Hydrophilic group-containing monomer unit [mass%] | 10 | 10 | 10 | 10 | 7 | 10 | 10 | 10 | 30 | - |
| | Iodine value [mg/100 mg] | 5 | 5 | 5 | 5 | 5 | 5 | 5 | 5 | 5 | 5 |
| | Weight-average molecular weight (Mw) [-] | 25,000 | 25,000 | 25,000 | 25,000 | 25,000 | 25,000 | 25,000 | 25,000 | 25,000 | 25,000 |
| Triphenylphosphine sulfide | Content [mass ppm] | 50 | 90 | 5 | 50 | 90 | 50 | - | 160 | 10 | 50 |
| | $\{(a)/(b)\} \times 100$ [%] | 0.050 | 0.090 | 0.005 | 0.050 | 0.129 | 0.050 | - | 0.160 | 0.003 | - |
| Monovalent cations | Content [mass ppm] | 40 | 40 | 40 | 90 | 40 | 120 | 40 | 40 | 40 | 40 |

EP 4 546 468 A1

19

(continued)

| Evaluation | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| | Binder viscosity change rate | A | B | B | B | B | C | B | B | B | B |
| | Dispersibility of conductive material | A | A | B | B | B | C | D | D | C | D |
| | Peel strength | A | B | A | B | B | B | A | D | A | B |
| | Gas evolution of electrode | A | A | B | B | A | C | D | A | D | A |

It can be seen from Table 1 that a conductive material dispersion liquid having excellent conductive material dispersibility can be produced through the binder compositions of Examples 1 to 6 and that a lithium ion secondary battery having excellent peel strength and suppressed gas evolution is obtained by using this conductive material dispersion liquid.

In contrast, it can be seen from Table 1 that conductive material dispersibility is reduced and that gas evolution of an electrode is not suppressed in Comparative Example 1 in which the used binder composition does not contain triphenylphosphine sulfide. Moreover, it can be seen from Comparative Example 2 that conductive material dispersibility is reduced and peel strength is also reduced in a situation in which the amount of triphenylphosphine sulfide contained in a binder composition exceeds a specific amount. Furthermore, it can be seen from Comparative Example 3 that gas evolution of an electrode is not suppressed in a situation in which the amount of triphenylphosphine sulfide and the amount of a hydrophilic group-containing monomer unit contained in a binder composition do not satisfy a specific relationship.

Also, it can be seen from Comparative Example 4 that conductive material dispersibility is reduced in a situation in which a binder composition does not contain a polymer having a specific chemical composition.

INDUSTRIAL APPLICABILITY

According to the present disclosure, it is possible to provide a binder composition for an electrochemical device that enables production of a conductive material dispersion liquid having sufficiently high conductive material dispersibility and that also enables production of an electrode having excellent peel strength and reduced gas evolution.

Moreover, according to the present disclosure, it is possible to provide a conductive material dispersion liquid for an electrochemical device and a slurry for an electrochemical device electrode that have sufficiently high conductive material dispersibility and that also enable production of an electrode having excellent peel strength and reduced gas evolution.

Furthermore, according to the present disclosure, it is possible to provide an electrode for an electrochemical device that has excellent peel strength and reduced gas evolution and an electrochemical device that includes this electrode for an electrochemical device.

**Claims**

1. A binder composition for an electrochemical device comprising:

   a polymer including a nitrile group-containing monomer unit, an alkylene structural unit, and a hydrophilic group-containing monomer unit;
   N-methyl-2-pyrrolidone; and
   triphenylphosphine sulfide, wherein
   content of the triphenylphosphine sulfide is not less than 2 mass ppm and not more than 100 mass ppm relative to content of the polymer, and
   a relationship formula shown below:

$$0.004(\%) \leq \{(a)/(b)\} \times 100(\%) \leq 0.150(\%)$$

   is satisfied when the content of the triphenylphosphine sulfide relative to the content of the polymer is taken to be (a) and content of the hydrophilic group-containing monomer unit relative to the content of the polymer is taken to be (b).

2. The binder composition for an electrochemical device according to claim 1, wherein content of monovalent cations is 100 mass ppm or less relative to the content of the polymer.

3. A conductive material dispersion liquid for an electrochemical device comprising at least: the binder composition for an electrochemical device according to claim 1; and a conductive material.

4. The conductive material dispersion liquid for an electrochemical device according to claim 3, wherein the conductive material is one or more carbon nanotubes.

5. A slurry for an electrochemical device electrode comprising at least: the conductive material dispersion liquid for an electrochemical device according to claim 3; and an electrode active material.

6.  An electrode for an electrochemical device comprising an electrode mixed material layer formed using the slurry for an electrochemical device electrode according to claim 5.

7.  An electrochemical device comprising the electrode for an electrochemical device according to claim 6.

# EP 4 546 468 A1

<table>
<tr><td colspan="2"><strong>INTERNATIONAL SEARCH REPORT</strong></td><td>International application No.<br><strong>PCT/JP2023/022504</strong></td></tr>
</table>

| A. | CLASSIFICATION OF SUBJECT MATTER |
|---|---|

*H01M 4/62*(2006.01)i; *C08K 3/04*(2006.01)i; *C08K 5/3415*(2006.01)i; *C08K 5/5398*(2006.01)i; *C08L 101/00*(2006.01)i; *H01G 11/22*(2013.01)i; *H01G 11/30*(2013.01)i; *H01G 11/60*(2013.01)i; *H01M 4/13*(2010.01)i; *H01M 4/139*(2010.01)i
FI: H01M4/62 Z; H01M4/139; H01M4/13; C08L101/00; C08K5/3415; C08K5/5398; C08K3/04; H01G11/30; H01G11/60; H01G11/22

According to International Patent Classification (IPC) or to both national classification and IPC

| B. | FIELDS SEARCHED |
|---|---|

Minimum documentation searched (classification system followed by classification symbols)

H01M4/62; C08K3/04; C08K5/3415; C08K5/5398; C08L101/00; H01G11/22; H01G11/30; H01G11/60; H01M4/13; H01M4/139

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2004-119260 A (TOSHIBA CORP.) 15 April 2004 (2004-04-15)<br>entire text, all drawings | 1-7 |
| A | US 2014/0199592 A1 (PYUN DONG-CHUL) 17 July 2014 (2014-07-17)<br>entire text, all drawings | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/022504**

| Patent document cited in search report | | | Publication date (day/month/year) | Patent family member(s) | | | Publication date (day/month/year) |
|---|---|---|---|---|---|---|---|
| JP | 2004-119260 | A | 15 April 2004 | (Family: none) | | | |
| US | 2014/0199592 | A1 | 17 July 2014 | WO | 2013/023216 | A1 | |
| | | | | EP | 2742084 | A1 | |

Form PCT/ISA/210 (patent family annex) (January 2015)

**EP 4 546 468 A1**

**Patent documents cited in the description**

- WO 2016103730 A1
- WO 2013080989 A1
- WO 2012115096 A1
- JP 2012204303 A